# EUROPEAN PATENT SPECIFICATION

(11) **EP 3 715 167 B1**
(45) Date of publication and mention of the grant of the patent: **20.04.2022**
(21) Application number: 20164095.0
(22) Date of filing: 19.03.2020
(51) Int. Cl.: B60K 37/06, B60W 50/08, B60W 50/14, A01D 34/00

(54) **RIDING LAWN EQUIPMENT ENGINE SPEED CONTROL MODULE**
MODUL ZUR STEUERUNG DER MOTORDREHZAHL VON AUFSITZRASENAUSRÜSTUNGEN
MODULE DE RÉGLAGE DE VITESSE DE MOTEUR D'UN ÉQUIPEMENT POUR GAZON

(30) Priority: 29.03.2019 US 201916370183
(43) Date of publication of application: 30.09.2020
(73) Proprietor: Deere & Company, Moline, IL 61265 (US)
(72) Inventor: Mayefske, Mark, 68163 Mannheim (DE); Glover, Ryan J, 68163 Mannheim (DE); Zwieg, Kevin M, 68163 Mannheim (DE); Braun, Jesse, 68163 Mannheim (DE); Slaughter, Matthew, 68163 Mannheim (DE)
(74) Representative: Lavall, Christian Henner

(56) References cited:
- WO-A2-2010/051409
- US-A1- 2017 006 763
- US-A1- 2017 196 164
- US-B2- 7 172 041

## Description

This invention relates generally to riding lawn equipment, and specifically to an engine speed control module for riding lawn equipment.

In the past, riding lawn equipment has included push-pull cable controls that an operator may use to set or change the speed of an internal combustion engine which provides traction drive and powers a plurality or rotary cutting blades under a mower deck, or other PTO driven implements such as a snow blower. These mechanical engine speed controls are typically infinitely variable from a low idle position to a high idle position.

More recently, electronic control units have been offered on electronically governed engines to control engine speed of riding lawn equipment. Some electronic control units on riding lawn equipment may be designed to hold engine speed constant while under varying loads due to terrain and turf thickness. For example, US Patent 7744503 for Engine-Driven Work Machine describes setting a machine that sets a medium target engine speed at which the engine is capable of generating a maximum torque, and a high target engine speed for generating a maximum output. US Patent 9002585 for Control System for Grounds Maintenance Vehicle relates to a user-selectable engine speed switch for setting the speed of an internal combustion engine on riding lawn equipment, where one may select any of several discrete engine speed settings or positions, and the speed also depends on engagement or disengagement status of the PTO clutch. WO 2010/051409 A2 describes an engine control for internal combustion engine of a riding-type lawn tractor, that operates the internal combustion engine at the selected engine speed. US 2017/196164 A1 describes a riding mower having a switch in communication with electronic controller, where actuation of switch causes controller to command speed of prime mover to first preset speed different than second and third speeds.

There is a need for a riding lawn equipment engine speed control module that allows operators to customize the operation of their equipment by selecting an engine speed within a range of engine speed settings for each operating mode, based on their unique application, demands and preferences. There is a need for a riding lawn equipment engine speed control module that allows operators to program and specify engine speeds in one or more operating modes. There is a need for a riding lawn equipment engine speed control module that allows operators to select engine speeds that are suitable for terrain and turf thickness where the equipment is operated.

A riding lawn equipment engine speed control module has a plurality of mode buttons, each mode button providing a signal to operate an electronically controlled engine at a different range of engine speeds. A user programmable button specifies an engine speed within the range of engine speeds for each of the mode buttons. Additionally, at least one button is used to increment or decrement engine speed in the range of engine speeds.

The riding lawn equipment engine speed control further comprises a user programmable memory to store the user selectable engine speed within each speed range.

Such it allows operators to customize the operation of their equipment by selecting an engine speed within a range of engine speed settings for each operating mode, based on their unique application, demands and preferences, to program and specify engine speeds in one or more operating modes, and to select engine speeds that are suitable for terrain and turf thickness where the equipment is operated
Fig. 1 is a top perspective view of a riding lawn equipment engine speed control module used with riding lawn equipment according to a first embodiment of the invention.
Fig. 2 is a top perspective view of a riding lawn equipment engine speed control module according to a second embodiment of the invention.
Fig. 3 is a software logic diagram for a riding lawn equipment engine speed control module according to a second embodiment of the invention.
Fig. 4 is a software logic diagram of a user programmable button feature for the riding lawn equipment speed control module according to the first and second embodiments of the invention.

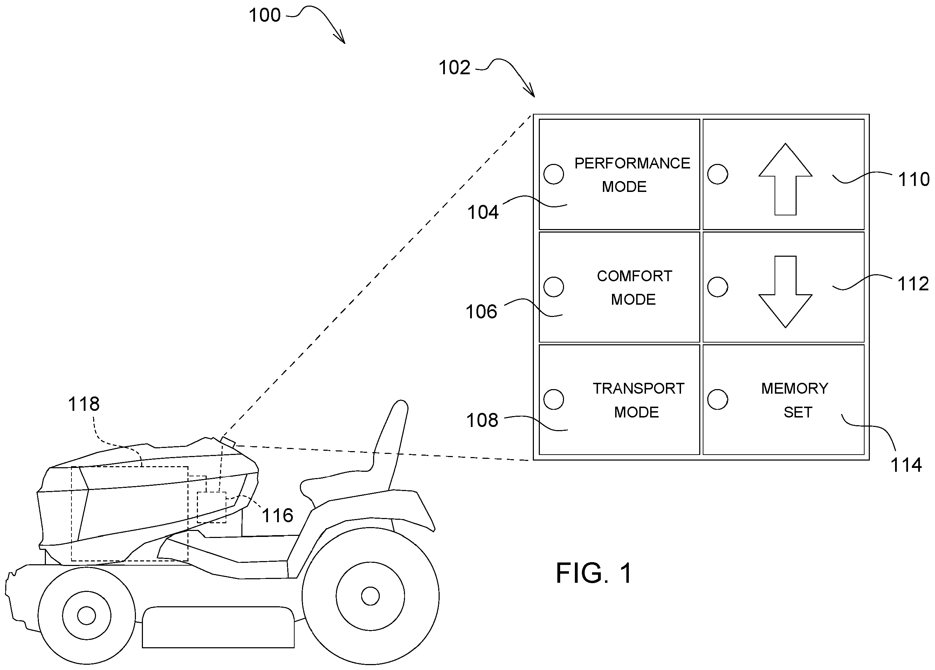

In a first embodiment shown in Fig. 1, riding lawn equipment engine speed control 100 includes module 102 having a plurality of operating mode selection buttons 104, 106, 108, increment and decrement buttons 110, 112, and user programmable button 114. Module 102 may be a sealed switch module and may be attached to the dash or control panel of riding lawn equipment, and electrically connected to electronic control unit 116 on electronically governed engine 118. Alternatively, the module may communicate with a vehicle controller, which then may communicate with an engine controller. Or the module may be attached to or combined with the vehicle controller. The electronically governed engine may hold engine speed constant while under varying loads due to terrain and turf thickness.

In a first embodiment, riding lawn equipment engine speed control module 102 has high speed or performance mode button 104, medium speed or economy mode button 106, and low speed or transport mode button 108. When the high speed or performance mode button is actuated, the sealed switch module provides a high speed signal to the electronic control unit, and the electronic control unit operates the engine at a constant speed setting within a defined high engine speed range such as 3050 rpm to 3300 rpm. When the medium or economy mode button is actuated, the sealed switch module provides a medium speed signal to the electronic control unit, and the electronic control unit operates the engine at a constant speed setting within a medium engine speed range such as 2850 rpm to 3049 rpm. When the low or transport speed button is actuated, the sealed switch module provide a low speed signal to the electronic control unit, and the electronic control unit operates the engine at a constant speed setting within a low engine speed range such as 1900 rpm to 2849 rpm.

In a first embodiment, riding lawn equipment speed control module 102 has increment engine speed button 110 and decrement engine speed button 112, which may be actuated to adjust engine speed within the range for the selected operating mode, up to the minimum and maximum engine speed for that mode. The increment and decrement engine speed buttons may increase or decrease engine speed by fixed amounts such as 50 rpm, or may increase or decrease engine speed continuously based on how long the operator presses the increment or decrement button.

In a first embodiment, riding lawn equipment speed control module 102 has user programmable button 114, which is used to program a preferred engine speed for one or more operating modes. Once the operator programs a preferred speed for an operating mode, he can use the mode select button again to signal the electronic control unit to operate the engine at the preferred speed, or return the engine to the preferred speed, when in that operating mode. As a result, the operator customizes the engine speed within each operating mode.

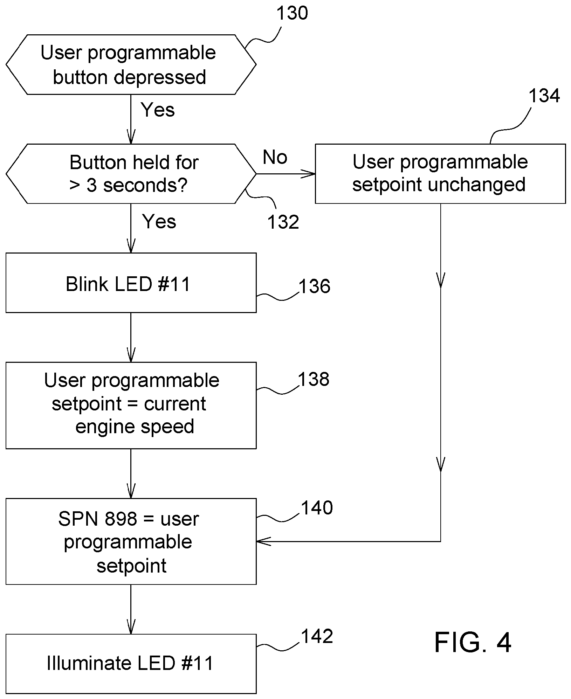

For example, as shown in the software logic diagram of Fig. 4, the electronic control unit receives a signal from the module indicating the user programmable button is actuated in block 130. The electronic control unit determines if the button is actuated for more than a specified time such as 3 seconds in block 132. If the button is not actuated more than the specified time, the electronic control unit does not change the setpoint in block 134. If it is actuated for more than the specified time, an indicator light on the module blinks in block 136. Then the electronic control unit sets the user programmable setpoint as the current engine speed in block 138, saves the new user programmable setpoint in block 140, and illuminates the indicator light again in block 142. As a result, the engine speed can be saved for later use.

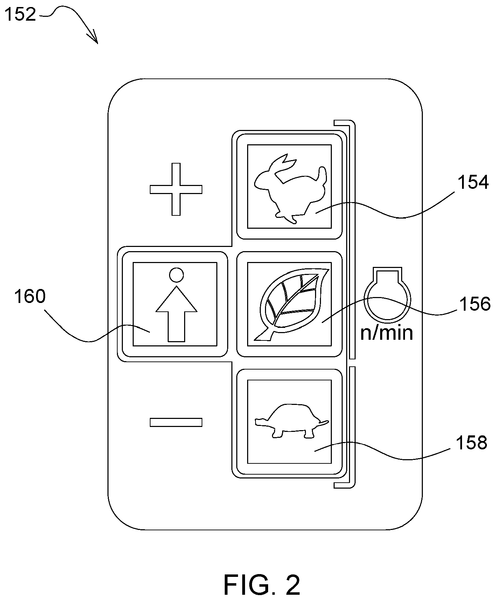

In a second embodiment shown in Fig. 2, riding lawn equipment speed control module 152 may have high speed or performance mode button 154, medium or economy mode button 156, low or transport mode button 158, and user programmable button 160. In the second embodiment, the high speed or performance button also may be used to increment engine speed, and the low speed or transport button also may be used to decrement engine speed. For example, the electronic control unit may require actuation of the high speed or performance mode button for at least a specified time, such as 500 ms, to operate the engine within the high engine speed range. If the high speed or performance button is actuated less than 500 ms, the electronic control unit may increment engine speed within the range for the presently used operating mode. Similarly, the electronic control unit may require actuation of the low speed or transport mode button for at least a specified time, such as 500 ms, to operate the engine within the low engine speed range. If the low speed or transport mode button is actuated less than 500 ms, the electronic control unit may decrement engine speed within the range for the presently used operating mode. In the second embodiment, the user programmable button may function substantially the same as the user programmable button of the first embodiment.

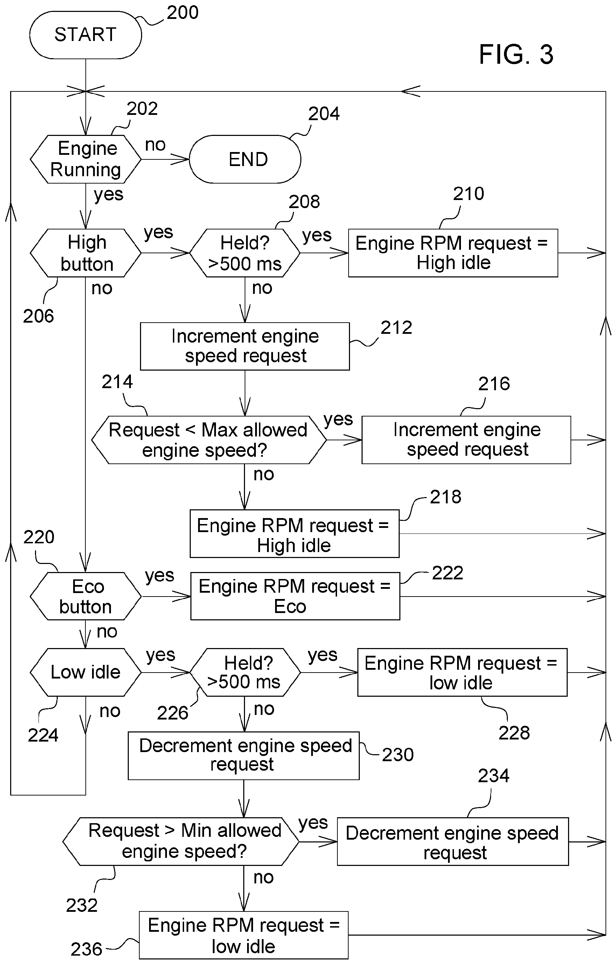

Fig. 3 is a software logic diagram of the riding lawn equipment engine speed control of the second embodiment. The electronic control unit may start the software logic in block 200, may receive a signal from the engine indicating if the engine is running in block 202, and the logic may stop in block 204 if the engine is not running. If the engine is running, the electronic control unit may receive a signal from the module indicating if the high speed mode button is actuated in block 206. If the high button is actuated, the electronic control unit may determine if it is actuated for more than 500 ms in block 208. If the high button is actuated for more than 500 ms, the electronic control unit may signal the engine to run at a specified high engine speed such as high idle in block 210, which is within the range of speed settings for the high speed or performance mode. If the high button is not actuated more than 500 ms, the electronic control unit may determine that actuation is a request to increment engine speed in block 212. The electronic control unit then may determine if the request from the module will result in an engine speed that is less than the maximum allowed engine speed for the high speed or performance mode in block 214. If the electronic control unit determines the increment request will result in an engine speed that is less than the maximum allowed engine speed for the high speed mode, the electronic control unit may increment engine speed in block 216. If the increment request will result in an engine speed that is not less than the maximum speed for the high speed mode, the electronic control unit will operate the engine at the high idle speed in block 218, within the range for the high speed mode.

Still referring to Fig. 3, if the high speed mode button is not actuated, the electronic control unit may determine if the economy or medium speed button is actuated in block 220. If the economy mode button is actuated, the electronic control unit may signal the engine to run at a specified economy engine speed in block 222, which is within the range of speed settings for the economy or medium speed mode. If the economy mode button is not actuated, the electronic control unit may determine if the low speed or transport button is actuated in block 224. If the low button is not actuated, the logic may return to block 202. If the low button is actuated, the electronic control unit may determine if it is actuated for more than 500 ms in block 226. If the low button is actuated for more than 500 ms, the electronic control unit may signal the engine to run at a specified low engine speed such as low idle in block 228, which is within the range of speed settings for the low speed mode. If the low button is not actuated more than 500 ms, the electronic control unit may determine that actuation is a request to decrement engine speed in block 230. The electronic control unit then may determine if the decrement request will result in an engine speed that is greater than the minimum allowed engine speed for the low speed mode in block 232. If the decrement request will result in a speed that is greater than the minimum allowed engine speed for the low speed mode, the electronic control unit may decrement engine speed in block 234. If the decrement request will result in a speed that is not greater than the minimum speed for the low speed mode, the electronic control unit will operate the engine at the low idle speed in block 236, within the range for the low speed mode.

Having described the preferred embodiments, it will become apparent that various modifications can be made without departing from the scope of the invention as defined in the accompanying claims.

## Claims

1. A riding lawn equipment engine speed control module, comprising:
a user operated button that provides signals to an electronic control unit to set an engine speed within each of a plurality of different speed ranges; increase or decrease engine speed within each of the different speed ranges; and select a speed within each speed range,
**characterized by** comprising a user programmable memory to store the user selectable engine speed within each speed range.

2. The riding lawn equipment engine speed control module of claim 1 further comprising at least one button to select one of the speed ranges, and to increment or decrement engine speed within the speed range.

3. The riding lawn equipment engine speed control module of claim 1 wherein the different speed ranges do not overlap each other.

4. The riding lawn equipment engine speed control module of claim 1 further comprising a button to continuously change engine speed within any of the speed ranges.

## Patentansprüche

1. Motordrehzahlsteuermodul für Aufsitzgeräte für den Rasen, das Folgendes umfasst:
eine durch einen Benutzer betätigte Schaltfläche, die Signale an eine elektronische Steuereinheit liefert, um eine Motordrehzahl innerhalb jedes von mehreren verschiedenen Drehzahlbereichen einzustellen; eine Motordrehzahl innerhalb jedes der verschiedenen Drehzahlbereiche zu erhöhen oder zu verringern; und eine Drehzahl innerhalb des Drehzahlbereichs auszuwählen,
**dadurch gekennzeichnet, dass** es einen durch einen Benutzer programmierbaren Speicher zum Speichern der durch einen Benutzer auswählbaren Drehzahl innerhalb jedes Drehzahlbereichs umfasst.

2. Motordrehzahlsteuermodul für Aufsitzgeräte für den Rasen nach Anspruch 1, ferner umfassend mindestens eine Schaltfläche zum Auswählen eines der Drehzahlbereiche und zum Inkrementieren oder Dekrementieren einer Motordrehzahl innerhalb des Drehzahlbereichs.

3. Motordrehzahlsteuermodul für Aufsitzgeräte für den Rasen nach Anspruch 1, wobei sich die verschiedenen Drehzahlbereiche nicht überschneiden.

4. Motordrehzahlsteuermodul für Aufsitzgeräte für den Rasen nach Anspruch 1, ferner umfassend eine Schaltfläche zum kontinuierlichen Ändern einer Drehzahl innerhalb eines beliebigen der Drehzahlbereiche.

## Revendications

1. Module de régulation de vitesse de moteur d'équipement pour gazon autoporté, comportant :
un bouton actionné par l'utilisateur qui fournit des signaux à une unité de commande électronique pour régler une vitesse de moteur à l'intérieur de chaque gamme d'une pluralité de gammes de vitesse différentes ; augmenter ou diminuer une vitesse de moteur à l'intérieur de chacune des gammes de vitesse différentes ; et
sélectionner une vitesse à l'intérieur de chaque gamme de vitesse,
**caractérisé en ce qu'**il comporte une mémoire programmable par l'utilisateur pour stocker la vitesse de moteur sélectionnable par l'utilisateur à l'intérieur de chaque gamme de vitesse.

2. Module de régulation de vitesse de moteur d'équipement pour gazon autoporté selon la revendication 1, comportant en outre au moins un bouton servant à sélectionner une des gammes de vitesse, et à incrémenter ou décrémenter une vitesse de moteur à l'intérieur de la gamme de vitesse.

3. Module de régulation de vitesse de moteur d'équipement pour gazon autoporté selon la revendication 1, les différentes gammes de vitesse ne se chevauchant pas.

4. Module de régulation de vitesse de moteur d'équipement pour gazon autoporté selon la revendication 1, comportant en outre un bouton servant à modifier continûment une vitesse de moteur à l'intérieur de l'une quelconque des gammes de vitesse.
